# EUROPÄISCHE PATENTANMELDUNG

(11) **EP 1 291 113 A1**
(43) Veröffentlichungstag der Anmeldung: **12.03.2003**
(21) Anmeldenummer: 02018409.9
(22) Anmeldetag: 16.08.2002
(51) Int. Cl.: B23K 11/25

(54) **Schweisszange sowie Verfahren zur Beurteilung der Qualität einer Schweissverbindung**

(30) Priorität: 11.09.2001 DE 10144731; 01.06.2002 DE 10224402
(71) Anmelder: Cosytronic Computer-System-Electronic GmbH, 57537 Wissen (DE); MICOM Technologie Gesellschaft für Automation mbH & Co. KG, 52076 Aachen (DE)
(72) Erfinder: Heinz, Heribert, 57537 Wissen (DE); Rennau, Wolfram, Dr., 52076 Aachen (DE)
(74) Vertreter: Kohlmann, Kai, Dipl.-Ing.

(57) **Zusammenfassung**

Die Erfindung betrifft eine Schweißzange zum elektrischen Widerstandsschweißen mit zwei Elektroden, von denen mindestens eine an einem Elektrodenarm befestigt ist, Mitteln zum Bewegen von mindestens einem Elektrodenarm, wobei jeder Elektrodenarm endseitig von einer Elektrodenarmhalterung aufgenommen wird, Mitteln zum Erzeugen des Schweißstromes und einem Kraftsensor zur Erfassung eines Kraftistwertes zwischen den beiden Elektroden.

Um mit Hilfe eines einfachen, niedrig auflösenden Kraftsensors eine zuverlässige Messung der Elektrodenkraft und insbesondere eine Beurteilung der Qualität einer Verschweißung zu ermöglichen, wobei durch die Anordnung des Sensors Störkanten vermieden werden sollen, wird erfindungsgemäß vorgeschlagen, dass der Kraftsensor an einer der Elektrodenarmhalterungen angeordnet ist

Weiter wird ein Verfahren zur Beurteilung der Qualität einer Verschweißung unter Verwendung der erfindungsgemäßen Schweißzange vorgestellt.

## Beschreibung

Die Erfindung betrifft eine Schweißzange zum elektrischen Widerstandsschweißen mit zwei Elektroden, von denen mindestens eine an einem Elektrodenarm befestigt ist, Mitteln zum Bewegen von mindestens einem Elektrodenarm, wobei jeder Elektrodenarm endseitig von einer Elektrodenarmhalterung aufgenommen wird, Mitteln zum Erzeugen des Schweißstromes und einem Kraftsensor zur Erfassung eines Kraftistwertes zwischen den beiden Elektroden. Des weiteren betrifft die Erfindung ein Verfahren zur Beurteilung der Qualität einer Schweißverbindung von mindestens zwei Blechteilen beim elektrischen Widerstandsschweißen mittels einer erfindungsgemäßen Schweißzange mit einer elektrisch angetriebenen Spindel zum Bewegen mindestens eines Elektrodenarmes, einer Zangensteuerung, einer Positionsregelung für den elektrischen Antrieb sowie einem Leistungsteil umfassend eine Drehzahlregelung und einen Leistungsschalter für den elektrischen Antrieb, wobei das Leistungsteil einen Drehzahlsollwerteingang, einen Strombegrenzungseingang und einen mit dem Antrieb verbundenen Ausgang für das Motorleistungskabel aufweist.

Das elektrische Widerstandsschweißen- auch Widerstandspressschweißen genannt- lässt sich gut automatisieren und wird in großem Umfang insbesondere in der Automobilindustrie zum Verbinden von mindestens zwei Blechen angewendet.

Die zu verschweißenden Bleche werden zwischen zwei Elektroden zusammengepresst, die vorzugsweise je eine Schweißkappe mit einer genau definierten Geometrie als Kontaktfläche aufweisen. Die Kraft für die Schließbewegung der an Elektrodenarmen befestigten Elektroden erzeugen beispielsweise elektrisch angetriebene Motorspindeln oder aber auch pneumatische Zylinder.

Der Schweißstrom an der Kontaktstelle zwischen den zusammengepressten Blechen bewirkt eine Temperaturerhöhung, die zur Aufschmelzung der beiden Blechteile bis maximal zu deren Oberfläche führt. Das gemeinsame Schweißbad an der Kontaktstelle wird Schweißlinse genannt. Eine an die Aufschmelzung anschließende Abkühlung unter Wirkung von Presskräften führt zu einer Erstarrung der Schweißlinse, so dass die Bleche mechanisch miteinander verbunden sind.

Aus der EP 0594 086 B1 ist bereits eine pneumatische betriebene Schweißzange bekannt, bei der auf einem Elektrodenarm ein Kraftsensor angeordnet ist. Aufgrund der gemessenen Elektrodenkraft soll die Qualität des Schweißpunktes beurteilt und entscheiden werden, ob ggf. ein weiterer, benachbarter Schweißpunkt erforderlich ist. Der Kraftsensor ist ein konstruktiv aufwendiger optischer Sensor, dessen Wirkungsweise darauf beruht, dass die über einen Lichtweg im Sensorelement übertragene Lichtmenge eine Funktion der Verformung des den Lichtweg aufweisenden Teils des Sensors ist. Der Sensor ist über Lichtleiter mit einer opto-elektronischen Einheit verbunden, die für jeden Schweißpunkt die Beurteilung der Qualität und die sich daraus ergebenden Steuermaßnahmen durchführt.

Der an den Elektrodenarmen angebrachte Sensor stellt insbesondere in automatisierten Prozessen eine unerwünschte Störkante dar, an der beispielsweise Schlauchpakete der Schweißzange hängen bleiben können. Dies kann zu Betriebsstörungen führen.

Der konstruktiv aufwendige Lichtsensor wird als erforderlich angesehen, um die Beeinflussung des Sensors durch elektromagnetische Felder zu vermeiden, die durch den Schweißstrom in herkömmlichen Sensoren, wie beispielsweise Dehnmessstreifen hervorgerufen werden.

Die Erfindung macht sich die Tatsache zu Nutze, dass ein wesentliches Beurteilungsmerkmal für die Schweißqualität beim elektrischen Widerstandsschweißen die Eindringtiefe der Schweißelektroden bzw. der sie umgebenden Elektrodenkappen ist. Die Eindringtiefe ist die Differenz der Abstände der Elektroden vor, während und nach der Schweißung. Eine ordnungsgemäß durchgeführte Widerstandsschweißung führt regelmäßig zu einer messbaren Eindellung an den Kontaktstellen zwischen den Elektroden und den Blechoberflächen. Durch Erfassen der Eindringtiefe während und nach eines jeden Schweißprozesses und einem Vergleich mit vorgegebenen Parametern lässt sich daher die Qualität einer Verschweißung ermitteln.

Ausgehend von diesem Stand der Technik liegt der Erfindung die Aufgabe zu Grunde, eine Schweißzange vorzuschlagen, die mit Hilfe eines einfachen, niedrig auflösenden Kraftsensors eine zuverlässige Messung der Elektrodenkraft und insbesondere eine Beurteilung der Qualität einer Verschweißung zulässt, wobei durch die Anordnung des Sensors Störkanten vermieden werden sollen. Weiter soll ein Verfahren zur Beurteilung der Qualität einer Verschweißung unter Verwendung der erfindungsgemäßen Schweißzange vorgeschlagen werden.

Diese Aufgabe wird bei einer Schweißzange der eingangs erwähnten Art dadurch gelöst, dass der Kraftsensor an einer der Elektrodarmhalterungen angeordnet ist. Durch diese Anordnung ist ein ausreichender Abstand zum Strompfad des Schweißstromes gewährleistet, so dass es nicht zu elektromagnetischen Störungen bei der Kraftmessung kommt. Weiterhin befindet sich der Sensor in einem geschützten Bereich der Schweißzange, so dass er weder als Störkante in Erscheinung tritt, noch selbst beschädigt werden kann. Darüber hinaus kann jede beliebige Elektrodenarmform ohne Veränderung eingesetzt werden.

Wenn die Elektrodenarmhalterung ein Block mit mindestens einer ebenen Fläche ist, auf der der Kraftsensor angeordnet ist, ist eine besonders günstige Krafteinleitung gegeben.

Eine weitere Reduktion der elektromagnetischen Störung der Messung wird dadurch erreicht, dass die Elektrodenarmhalterung eine gegenüber den Elektrodenarmen isolierte Aufnahme für die Elektrodenarme aufweist.

Wenn der Kraftsensor ein Dehnungssensor ist, der auf der Oberfläche der Elektrodenarmhalterung vorzugsweise mittels einer Schraubverbindung befestigt ist, ergibt sich ein geringer Montageaufwand. Der Dehnungssensor misst die Abstandsänderung zwischen zwei Messpunkten auf der Oberfläche der Elektrodenarmhalterung. Die Abstandsänderung wird durch die von den Elektrodenarmen in der Halterung hervorgerufenen Biegespannungen verursacht, wobei die Abstandsänderung jeweils proportional zur Kraft zwischen den Elektroden ist.

Indem der Kraftsensor mindestens ein piezoelektrischen Sensorelement aufweist, das über einen Reibschluss mit der Oberfläche der Elektrodenarmhalterung deren Dehnung misst, entfällt die bei herkömmlichen Sensoren aufwendige Oberflächenvorbereitung, beispielsweise für das Aufkleben eines Dehnmessstreifens.

In vorteilhafter Ausgestaltung der Erfindung liefern die piezoelektrischen Sensorelemente als Ausgangssignal ein elektrische Ladung, die direkt proportional der gemessenen Dehnung ist. In Verbindung mit einem in den Sensor integrierten Verstärker für die elektrische Ladung, der die Änderung der elektrischen Ladung in ein Spannungssignal wandelt, werden niederohmige Ausgangssignale generiert, die mit preiswerten Standard-Messkabeln übertragen werden können. Eine elektromagnetische Störung bei der Übertragung ist durch die Integration des Verstärkers ausgeschlossen.

Der Verstärkungsfaktor des Verstärkers kann beispielsweise von einer Zangensteuerung vor einer Messung verändert werden, um eine optimale Auflösung des Messsignals zu erreichen. Eine weitere Verbesserung der Auflösung lässt sich erzielen, in dem die Messachse der Sensorelemente vorzugsweise mit der Richtung der größten zu erwartenden Spannungsänderung zusammenfällt.

Um die Qualität einer Schweißverbindung von mindestens zwei Blechteilen beim elektrischen Widerstandsschweißen beurteilen zu können, kommt eine Schweißzange nach einem oder mehreren der Ansprüche 1 bis 10 zum Einsatz. Die Schweißeinrichtung umfasst eine elektrisch angetriebene Spindel zum Bewegen mindestens eines Elektrodenarmes, eine Zangensteuerung, eine Positionsregelung für den elektrischen Antrieb sowie einem Leistungsteil mit einer Drehzahlregelung und einem Leistungsschalter für den elektrischen Antrieb, wobei das Leistungsteil einen Drehzahlsollwerteingang, einen Strombegrenzungseingang und einen mit dem Antrieb verbundenen Ausgang für das Motorleistungskabel aufweist.

In vorteilhafter Ausgestaltung der Erfindung wird die Qualität der Schweißverbindung mit der vorstehend beschriebenen Schweißeinrichtung beurteilt, in dem
- in einer Schließphase (27) der Schweißzange die Positionsregelung (25) unter Berücksichtigung des Spindelpositionsistwertes (23) den Abstand zwischen den Elektroden (4 a, b) solange verringert, bis der von dem Kraftsensor (63) gemessene Kraftistwert (60) einen von der Zangensteuerung (24) vorgegebenen ersten Kraftgrenzwert erreicht und/oder die aus der Änderung des Spindelpositionsistwertes (23) über die Zeit abgeleitete Antriebsgeschwindigkeit einen vorgegebenen Geschwindigkeitsgrenzwert unterschreitet,
- die Zangensteuerung (24) nach Erreichen des Kraftgrenzwertes und/oder Geschwindigkeitsgrenzwertes in einer Elektrodenkraftaufbauphase (28) von der Positionsregelung (25) auf die Drehzahlregelung (16) umschaltet und über den Strombegrenzungseingang (19) des Leistungsteils (15) den zum Antriebsmoment proportionalen Antriebsstrom auf einen Stromgrenzwert unterhalb des maximal möglichen Antriebsstroms begrenzt, so dass das Leistungsteil (15) den Antrieb (6) solange mit Strom versorgt, bis sich das dem Stromgrenzwert entsprechende Antriebsmoment einstellt, das eine gewünschte Elektrodenkraft bewirkt und mit einem Stillstand der Spindel (7) einhergeht,
- in einer sich anschließenden Schweißphase (30) Mittel zum Erzeugen des Schweißstromes (12, 13) aktiviert sind und zumindest während der gesamten Schweißphase (30) der Kraftistwert (60) von der Zangensteuerung (24) ausgewertet wird.

Die Erkennung des Eindringens der Elektroden ist in vielen Fällen nur möglich, wenn sich an den Schweißvorgang eine Auswerteverlängerungsphase gemäß den Merkmalen der Ansprüche 12, 13 und 17 anschließt. Diese Auswerteverlängerungsphase verzögert das Öffnen der Schweißzange solange, bis die Zangensteuerung eine ordnungsgemäße Verschweißung erkannt hat oder am Ende der Auswerteverlängerungsphase feststeht, dass das Eindringen zu gering war, also eine unzureichende oder keine Verschweißung stattgefunden hat.

Die Auswerteverlängerungsphase ist in vorteilhafter Ausgestaltung der Erfindung in mehrere Verlängerungsabschnitte unterteilt, wobei die Zangensteuerung die sich der Schweißphase anschließenden Verlängerungsabschnitte von beispielsweise 20 ms Dauer sukzessive solange in die Auswertung einbezieht, bis das Auswerteergebnis eine Aussage über die Schweißqualität zulässt. Das Überschreiten der maximalen Dauer der Auswerteverlängerungsphase ohne das Erkennen eines Eindringens der Elektroden wird als fehlerhafte Schweißung gedeutet, beispielsweise aufgrund eines Nebenschlusses. Wenn eine Auswerteverlängerungsphase im Anschluss an den Schweißvorgang vorgesehen wird, kann die ansonsten beim Widerstandsschweißen erforderliche Nachpresszeit entfallen.

Eine verbesserte Beurteilung der Qualität einer Schweißverbindung lässt sich erreichen, wenn die Mittel zum Erzeugen des Schweißstromes, insbesondere die Widerstandsschweiß-Steuerung ein Signal über die Beendigung der Schweißphase und/oder eine Maßzahl über die Qualität der Verschweißung an die Zangensteuerung überträgt, z.B. die Regelgüte des Schweißstromes über die Dauer der Schweißung. Alternativ wird keine Maßzahl, sondern der Istwert des Schweißstromes und/oder der Schweißspannung sowie die Stellgröße (Zündwinkel, PWM bei Mittelfrequenz) für den Schweißstrom übertragen. Die Zangensteuerung erfasst die Stellgröße und die Istwerte und stellt Beginn und Ende der Verschweißung fest. Der zeitliche Verlauf der Stellgröße und der Istwerte wird nach an sich bekannten mathematischen Methoden in eine Maßzahl umgerechnet. Die gemeinsame Auswertung der Maßzahl der Widerstandsschweißsteuerung und des Kraftistwertes in der Zangensteuerung erhöht die Aussagegenauigkeit über die Eindringtiefe der Schweißelektroden erheblich. Die Datenübertragung zwischen der Widerstandsschweiß-Steuerung und der Zangensteuerung erfolgt in kurzen zeitlichen Abständen, beispielsweise von 1 ms. Der Ausfall einer Datenübertragung, z.B. das Ausbleiben des Signals über die Beendigung der Schweißphase, kann von der Zangensteuerung als fehlerhafte Verschweißung erkannt werden.

Die Datenübertragung und Auswertung nach den Ansprüchen 18, 19 hebt die bisher übliche strikte Trennung zwischen der Widerstandsschweiß-Steuerung und der Zangensteuerung auf. Ein Vorteil besteht darin, dass die Parameter für die Widerstandsschweißsteuerung, wie beispielsweise der Schweißstrom und die Schweißzeit, zusammen mit den Parametern zur Steuerung der Schweißzange, wie z.B. die Elektrodenkraft verwaltet, gespeichert und dokumentiert werden können. Die Schweißparameter sind vorzugsweise in der Zangensteuerung abgelegt und werden von dort an die Mittel zum Erzeugen des Schweißstromes übertragen.

Die Signalübertragung zwischen den Mitteln zum Erzeugen des Schweißstromes und der Zangensteuerung erfolgt vorzugsweise über ein bidirektionales, die Mittel zum Erzeugen des Schweißstromes von der Zangensteuerung galvanisch trennendes Interface, beispielsweise ein CAN- (Controller Area Network) - Bus. CAN bezeichnet ein serielles Bussystem, das in den Normen ISO 11898 (Highspeed) und ISO 11519-2 (Lowspeed) standardisiert ist. Auf CAN basierende Bussysteme sind weit verbreitet in Kraftfahrzeugen und industriellen Anlagen. Haupteinsatzgebiete sind die Fahrzeugelektronik und die Automatisierung. Der CAN-Bus gewährleistet die für die Signalübertragung zwischen Zangen- und Widerstandsschweiß-Steuerung erforderlichen kurzen Antwortzeichen im Bereich von einer Millisekunde. Die galvanische Trennung bewirkt ein Optokoppler und/oder Lichtleiter.

In dem die Schweißparameter bereits während der Schließphase über den CAN-Bus übertragen werden können, ist es möglich, die anschließende Elektrodenkraftaufbauphase für die Vorpresszeit und Vorwärmung der Elektroden vor dem Beginn der eigentlichen Schweißphase zu nutzen. Hierdurch lässt sich die Gesamtdauer eines Verfahrenszyklus reduzieren. Ohne den CAN-Bus kann das Vorwärmen erst dann beginnen, wenn die Zangensteuerung mit Erreichen der Schließkraft am Ende der Elektrodenkraftaufbauphase ein Startsignal an die Widerstandsschweißsteuerung überträgt, dass den Schweißstrom nach einer programmierten Vorpresszeit auslöst.

Vorteilhafte Ausgestaltungen der Erfindung ergeben sich aus den Unteransprüchen sowie der nachfolgenden Beschreibung der Figuren und Diagramme. Es zeigen:
- Figur 1a: eine Schweißzange zum Durchführen des erfindungsgemäßen Verfahrens einschließlich einer schematischen Darstellung von deren Steuerung
- Figur 1b: eine Detailansicht von Elektrodenkappen der Schweißzange nach Fig. 1 a
- Figur 1c: eine Detailansicht eines Kraftsensors der Schweißzange nach Fig. 1 a
- Figur 1d: die Anordnung des Kraftsensors nach Figur 1c an der Schweißzange bei abgenommenem vorderem Zangenarm
- Figur 2: ein Weg-Zeit-Diagramm der Antriebsposition der Schweißzange, gemessen an der Spindel
- Figur 3: ein Kraftistwert-Zeit Diagramm, gemessen am Kraftistwertausgang des Kraftsensors der Schweißzange
- Figur 4: das Kraftistwert-Zeit Diagramm nach Fig.4 mit eingetragenen Hilfslinien zur Erläuterung der Auswertung
- Figur 5: ein Leitspannungs-Zeit Diagramm, gemessen am Drehzahlsollwerteingang und am Strombegrenzungseingang des Leistungsteils sowie
- Figur 6: die Schweißzange nach Fig. 1a einschließlich einer schematischen Darstellung einer gegenüber Fig. 1a abgeänderten Steuerung.

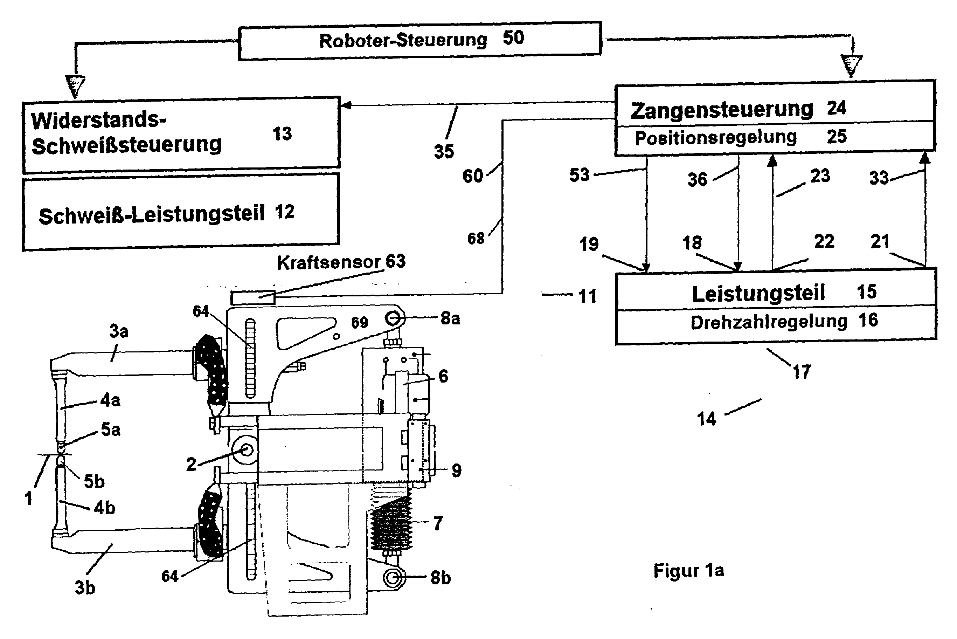

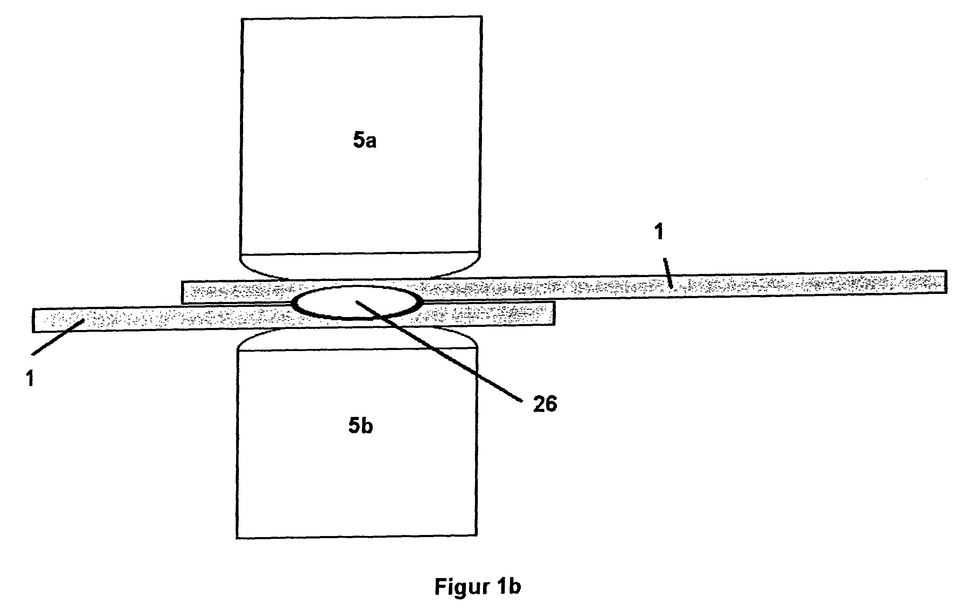

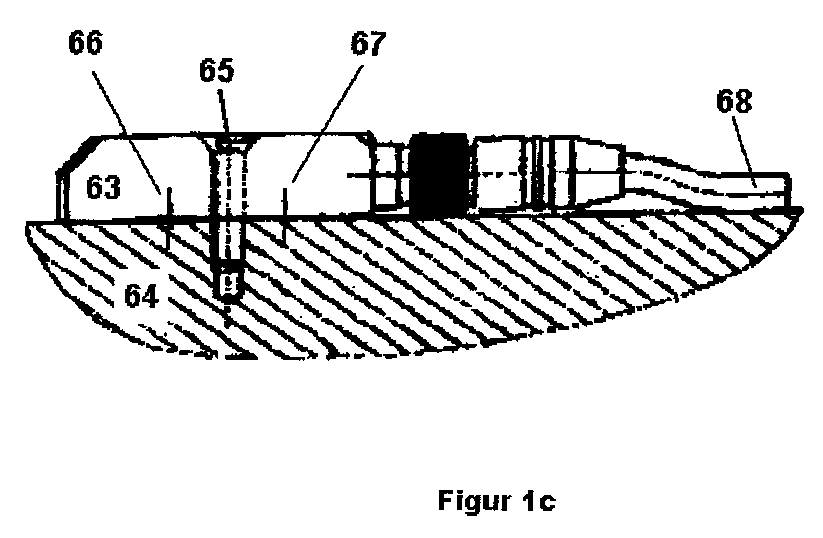

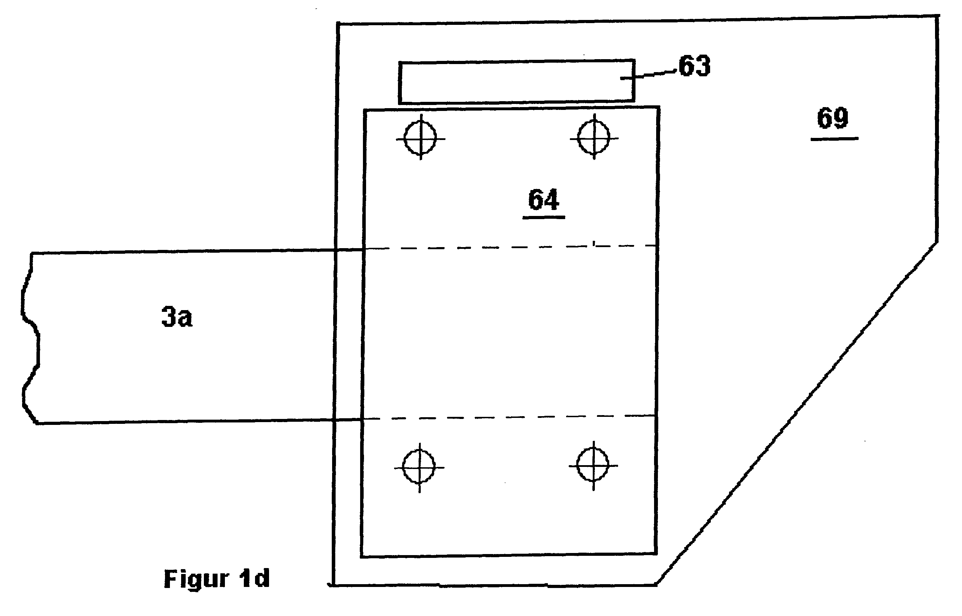

Figur 1 a zeigt eine Schweißzange zum Verbinden von Blechteilen 1 mit zwei um einen gemeinsamen Drehpunkt 2 schwenkbaren Elektrodenarmen 3 a, b. An den äußeren Enden der Elektrodenarme 3 a, b sind Stiftelektroden 4a,b angeordnet, die stirnseitig an der Kontaktstelle mit den Blechteilen 1 von Elektrodenkappen 5a, 5b umgeben werden. An den gegenüberliegenden Enden sind die Elektrodenarme 3a, 3b in Elektrodenarmhalterungen 64 gesteckt und mittels Schrauben festgeklemmt. Jede Elektrodenarmhalterung 64 befindet sich zwischen zwei Wangen eines Zangenarms 69 (vgl. Figur 1d).

Der Abstand der Elektroden 4 a, b lässt sich mit einer von einem Elektromotor 6, insbesondere einem Servomotor angetriebenen Spindel 7 verändern, in dem sie den Abstand zwischen an den gegenüberliegenden Enden der Elektrodenarme 3 a, b angeordneten Gelenken 8a, 8b verändert.

Der Schweißstrom fließt von einen Schweißtransformator 9 durch die Elektrodenarme 3 a, b zu den Elektroden 4 a, b. Der Schweißtransformator 9 ist über ein Schweißstromkabel 11 mit einem von einer Widerstandsschweißsteuerung 13 gesteuerten Schweißleistungsteil 12 verbunden. Wie in Figur 1 b erkennbar, bewirkt der Schweißstrom an der Kontaktstelle der zwischen den Elektrodenkappen 5 a, b zusammengepressten Blechteile 1 eine Temperaturerhöhung, die eine Schweißlinse 26 ausbildet. Eine an die Aufschmelzung anschließende Abkühlung unter Wirkung von Presskräften führt zu einer Erstarrung der Schweißlinse 26.

Figur 1c zeigt die Befestigung des als Dehnungssensor ausgestalteten Kraftsensors 63 auf der Oberfläche der Elektrodenarmhalterung 64 mittels einer Schraubverbindung 65. Der Dehnungssensor misst die Abstandsänderung zwischen zwei Messpunkten 66, 67 auf der Oberfläche der Elektrodenarmhalterung 64, die durch die von den Elektrodenarmen 3a, 3b in der Halterung 64 hervorgerufenen Biegespannungen verursacht wird.

Die zur Messung der Dehnung in dem Kraftsensor an den Messpunkten 66, 67 vorgesehenen piezoelektrischen Sensorelemente liefern als Ausgangssignal eine elektrische Ladung, die direkt proportional der gemessenen Dehnung ist. In den Kraftsensor 63 ist ein in der Figur 1 c nicht dargestellter Verstärker für die elektrische Ladung integriert, der die Änderung der elektrischen Ladung in ein Spannungssignal, den Kraftistwert 60 (Figur 1), wandelt, und über ein in Figur 1 c angedeutetes Messkabel 68 an eine Zangensteuerung 24 überträgt.

Der Elektromotor 6 für die Bewegung der Elektrodenarme 3a,3b ist über ein Motorkabel 14 mit einem handelsüblichen Leistungsteil 15 für Schweißzangen verbunden. Das Leistungsteil 15 umfasst eine Drehzahlregelung 16 und einen nicht dargestellten Leistungsschalter für den Elektromotor 6, beispielsweise einem ein 4 Quadranten- PI-Drehzahl-Servoregler (PI := Proportional-Integral) und einen untergelagertem PI-Stromregler. Als Schnittstelle weist das Leistungsteil 15 einen als Resolvereingang ausgestalteten Eingang für die Spindelposition 17, einen Drehzahlsollwerteingang 18, einen Strombegrenzungseingang 19, einen Stromistwertausgang 21 und einen Spindelpositionsistwertausgang 22 auf.

Die Eingänge 18, 19 sowie die Ausgänge 21, 22 sind mit einer Schweißzangensteuerung 24 mit integrierter Positionsregelung 25 verbunden. Auch die Positionsregelung besitzt PI-Charakteristik, um kleinste Regelabweichungen ohne bleibenden Fehler ausregeln zu können.

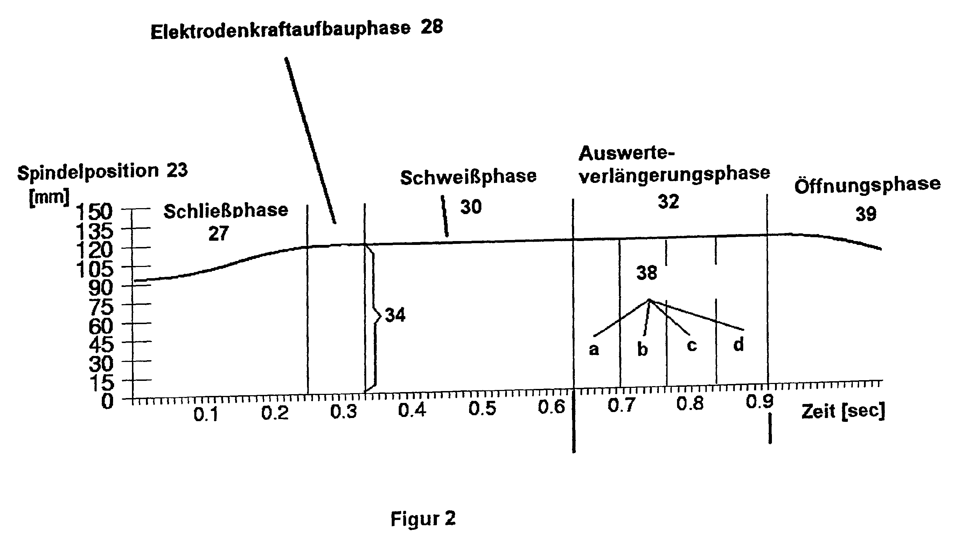

Der Ablauf für das Setzen eines Schweißpunktes mit der beschriebenen Schweißzange gliedert sich in eine Schließphase 27, eine Elektrodenkraftaufbauphase 28, eine Schweißphase 30 und ggf. eine Auswerteverlängerungsphase 32. In Figur 2 ist die Antriebsposition über die einzelnen Phasen dargestellt.

### A. Schließphase (27):

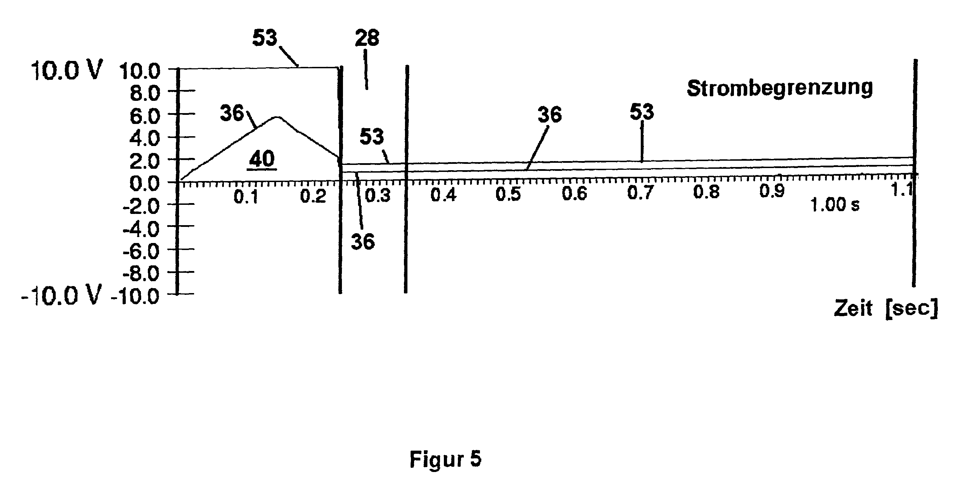

Die Positionsregelung 25 gibt einen über die Zangensteuerung 24 wählbares Drehzahlsollwertprofil 40 (Figur 5) an den Drehzahlsollwerteingang 18 des Leistungsteils aus und vergrößert unter Berücksichtigung des Spindelpositionsistwertes 23 den Abstand zwischen den Gelenken 8a, 8b der elektrisch angetriebenen Spindel 7, so dass sich die auf dem gemeinsamen Drehpunkt 2 gelagerten Elektrodenarme 3a,b und die daran angeordneten Stiftelektroden 4a, 4b aufeinander zu bewegen. Im Diagramm nach Figur 2 ist eine deutliche Änderung des Spindelpositionsistwertes 23 während der Schließphase 27 zu erkennen. Zunächst berühren die beiden Elektrodenkappen 5a, 5b die zu verschweißenden Blechteile 1 von beiden Seiten. Sodann werden die Blechteile 1 durch eine weiteres Vergrößern des Gelenkabstandes zusammengepresst. Die von der Positionsreglung 6 durchgeführte Schließphase 27 endet nach 0,24 sec, wenn der Kraftistwert 60 einen von der Zangensteuerung 24 vorgegebenen Kraftgrenzwert erreicht und/oder die Antriebsgeschwindigkeit unter einen Geschwindigkeitsgrenzwert fällt. Hierzu wird der Kraftistwert 60 fortlaufend erfasst und in der Zangensteuerung 24 mit dem Kraftgrenzwert verglichen und /oder die aus der Änderung des Spindelpositionsistwertes abgeleitete Antriebsgeschwindigkeit mit einem vorgegebenen Geschwindigkeitsgrenzwert verglichen. In Figur 2 ist an der abnehmenden Steigung der Spindelpositionskurve erkennbar, dass zum Schluss der Schließphase 27 die Antriebsgeschwindigkeit abfällt und unter den Geschwindigkeitsgrenzwert fällt.

### B. Elektrodenkraftaufbauphase (28):

Am Ende der Schließphase 27, also beim Erreichen des Kraftgrenzwertes und/oder Unterschreiten des Geschwindigkeitsgrenzwertes, schaltet die Zangensteuerung 24 von der Positionsregelung 25 auf die Drehzahlregelung 16 um. Über den Strombegrenzungseingang 19 erhält die Drehzahlregelung 16 von der Zangensteuerung 24 eine Leitspannung 53 (Figur 5), die den Motorstrom auf einen Wert unterhalb des maximal möglichen Motorstromes begrenzt. Die Begrenzung des zum Antriebsmoment proportionalen Antriebsstroms auf einen Stromgrenzwert 52 entspricht einer Vorgabe der Kraft zwischen den beiden Elektrodenkappen 5 a, b, der Elektrodenkraft. In der Elektrodenkraftaufbauphase 28 wird daher der Antriebsstrom durch Vorgabe einer Leitspannung 53 an dem Strombegrenzungseingang 19 auf denjenigen Stromgrenzwert begrenzt, aus dem die gewünschte Elektrodenkraft zwischen den Elektroden unter Berücksichtigung der Hebelverhältnisse der Schweißzange und der Spindelsteigung resultiert, beispielsweise 3 kN.

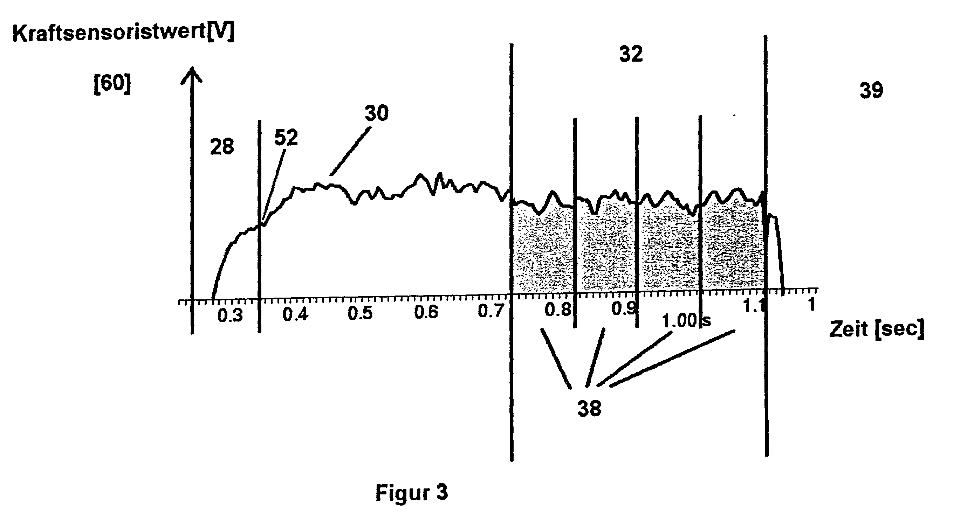

In der Zangensteuerung 24 wird während der Elektrodenkraftaufbauphase 28 fortlaufend der zu der Elektrodenkraft proportionale Kraftistwert 60 erfasst und dort in die resultierende Kraft zwischen den Elektrodenkappen 5 a, b umgerechnet. In Figur 3 ist der Anstieg des Kraftistwerts 60 bis zu einer gewünschten Elektrodenkraft 61 zu erkennen, die durch Vorgabe des Stromsgrenzwertes bestimmt wird.

Die Schweißzange schließt nun so weit, bis sich die gewünschte Elektrodenkraft zwischen den Elektrodenkappen 5a, 5b einstellt. Zu diesem Zeitpunkt ist der zweite Kraftistwert 61 und damit ein definiertes Antriebsmoment erreicht. Eine weitere Erhöhung der Kraft zwischen den Elektrodenkappen 5a, 5b findet daher nicht statt.

Im Diagramm nach Fig. 2 ist das Ende der Elektrodenkraftaufbauphase 28 nach etwa 0,34 sec erkennbar.

Mit Erreichen der Schließkraft überträgt die Zangensteuerung 9 ein Startsignal 35, beispielsweise einen aktiven 24 Volt Pegel, an die Widerstandsschweißsteuerung 13, die den Schweißstrom für den Schweißvorgang nach einer dort programmierten Vorpresszeit auslöst.

### C. Schweißphase (30)

Die Widerstandsschweißsteuerung 13 erzeugt über das Schweiß-Leistungsteil 12 und den Schweißtransformator 9 einen Stromfluss zwischen den beiden Elektrodenkappen 5a, 5b durch die dazwischen befindlichen Blechteile 1.

Die beiden Elektrodenkappen 5a, 5b pressen mit einer vorgegebenen Kraft die Blechteile 1 zusammen, wodurch das nun weiche und/oder flüssige Material deformiert, komprimiert und/oder zur Seite gedrückt wird, so dass sich die beiden Elektrodenkappen 5a, 5b annähern ("Eindringen"). Dieses Annähern der beiden Elektrodenkappen 5a, 5b bewirkt eine Kraftentlastung der Elektrodenarme 3a, 3b und daraus resultierend eine Änderung der gemessenen Kraft in der Elektrodenarmhalterung 64.

### D. Auswerteverlängerungsphase (32)

Während der Schweißphase 30 liegt häufig, wie auch in dem dargestellten Ausführungsbeispiel, noch keine auswertbare Änderung des Motormoments vor, da sich bis zum Abschalten des Schweißstromes der Abstand der Elektrodenkappen zueinander zunächst vergrößert ("öffnen"). Erst nach dem Abschalten des Schweißstromes und dem Abkühlen des Schweißgutes zwischen den Elektrodenkappen bewegen sich die Elektrodenkappen wieder aufeinander zu. Es kann daher notwendig sein, der Schweißphase 30, eine Auswerteverlängerungsphase 32 folgen zu lassen.

Die Auswerteverlängerungsphase 32 ist in mehrere Verlängerungsabschnitte 38 a - d (Figur 2) unterteilt. Nach Ablauf des ersten Verlängerungsabschnitts 38 a wird eine Auswertung des Kraftistwertes 60 über die gesamte Schweißphase 30 einschließlich des Verlängerungsabschnitts 38 a durchgeführt.

Diese Auswertung liefert eine Maßzahl, die proportional der Eindringtiefe der Elektrodenkappen 5a, 5b während des Schweißprozesses bzw. nach dem Schweißprozess ist.

Überschreitet die Maßzahl einen festgelegten Grenzwert, besagt dies, dass die Elektrodenkappen 5a, 5b tief genug eingedrungen sind, so dass mit hoher Wahrscheinlichkeit eine gute Schweißung vorliegt. Die Auswertung kann dann beendet und die Schweißzange in einer Öffnungsphase 39 (Figuren 2, 3) geöffnet werden. Wird der Grenzwert nicht erreicht, besagt dies, dass die Elektrodenkappen 5a, 5b nicht ausreichend tief eingedrungen sind, so dass mit hoher Wahrscheinlichkeit keine ordnungsgemäße Schweißung vorliegt. In diesem Fall erfolgt nach Ablauf eines weiteren Verlängerungsabschnitts 38 b eine erneute Auswertung des Kraftistwertes 60 über die Schweißphase 30 sowie die abgelaufenen Verlängerungsabschnitte 38a, b. Unterschreitet die Maßzahl nach wie vor den Grenzwert, wird die Auswertung so lange wiederholt, bis die maximale Dauer der Auswerteverlängerungsphase 38 a - 38 d erreicht ist oder die Maßzahl den Grenzwert überschritten hat.

Wurde der Grenzwert bis zum Abschluss der Auswerteverlängerungsphase nach 0,9 sec nicht überschritten wird die Schweißzange geöffnet und das Vorliegen eines Fehlers signalisiert.

### E. Auswertung in der Schweißphase (30) und der Auswerteverlängerungsphase (32)

Durch eine Auswertung des Kraftistwertes 60 über die Schweißphase 30 und ggf. einen oder mehrere Verlängerungsabschnitte 38 a - d der Auswerteverlängerungsphase 32 ist eine Erkennung der Eindringtiefe der Elektrodenkappen 5a, 5b möglich. Ein Ausbleiben einer Änderung des Kraftistwertes 60 zeigt eindeutig einen fehlerhafte Verschweißung, z.B. einen Nebenschluss.

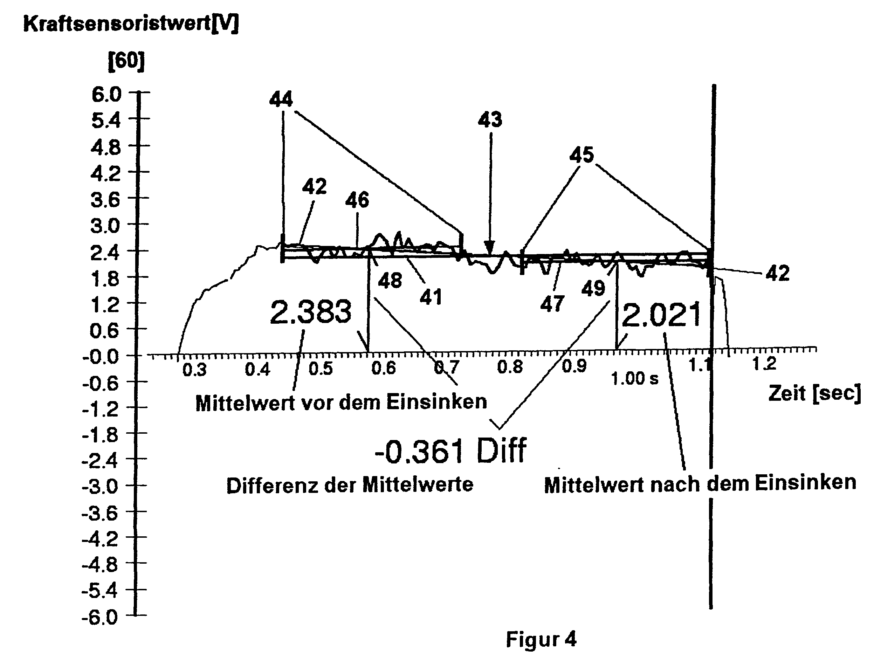

Die Auswertung des Kraftistwertes 60 über die Zeit darf erst in der Schweißphase 30 beginnen. Ein Beispiel für eine Auswertung des Kraftistwertes 60 wird anhand von Figur 4 erläutert:

Es wird über die gesamte Schweißphase 30 und die benötigten Verlängerungsabschnitte 38 a - d der Auswerteverlängerungsphase 32 (Auswertezeitraum) ein linearer Mittelwert der Kraftistwerte berechnet. Die den berechneten Mittelwert darstellende waagerechte Gerade ist in Figur 4 mit 41 gekennzeichnet.

Über den gleichen Auswertezeitraum wird eine lineare Regression berechnet, die im Fall des Einsinkens der Elektrodenkappen 5a, 5b eine Geradengleichung mit einer negativen Steigung liefert. Die berechnete Gerade 42 ist in Figur 4 ebenfalls dargestellt.

Der Schnittpunkt 43 dieser beiden Geraden kennzeichnet den Zeitpunkt des Einsinkens der Elektrodenkappen, der in Figur 4 nach etwa 0,77 sec erreicht ist.

Anschließend wird ein vorderer Referenzbereich 44 und ein hinterer Messbereich 45 festgelegt, wobei die beiden Bereiche 44, 45 durch den Schnittpunkt der Geraden 41, 42 voneinander getrennt sind.

Nun wird für beide Bereiche 44, 45 nochmals eine lineare Regression gerechnet, die jeweils eine Geradengleichung für den Referenz 44- und den Messbereich 45 ergibt. Die berechneten Geraden 46, 47 sind in Figur 4 ebenfalls dargestellt.

Der durch die Mitte der Geraden 46, 47 definierten Schwerpunkte 48, 49 für den Referenz 44 - und Messbereich 45 werden errechnet und die Differenz zwischen den Schwerpunkten berechnet. Dieser Wert bildet die Maßzahl, die nach einem Vergleich mit dem Grenzwert eine Entscheidung über ein ausreichendes Eindringen der Elektrodenkappen erlaubt.

### F. Interpretation der Maßzahl

Die Maßzahl entspricht einem gemessenen Kraftunterschied. Durch das Eindringen nähern sich die beiden Elektrodenkappen 5a, 5b einander an. Wegen der konstanten Federsteifigkeit der Elektrodenarme 2 entspricht dies einer Kraftentlastung der Arme. Folglich lässt sich die Maßzahl in eine entsprechende Änderung des Elektrodenabstandes und damit die Eindringtiefe umrechnen.

Die Beurteilung der Schweißqualität erlaubt es, nach der Schweißung geeignete Maßnahmen einzuleiten, wie beispielsweise eine Wiederholung des Schweißvorgangs und/oder eine Meldung an eine übergeordnete, in Figur 1a dargestellte Roboter-Steuerung 50.

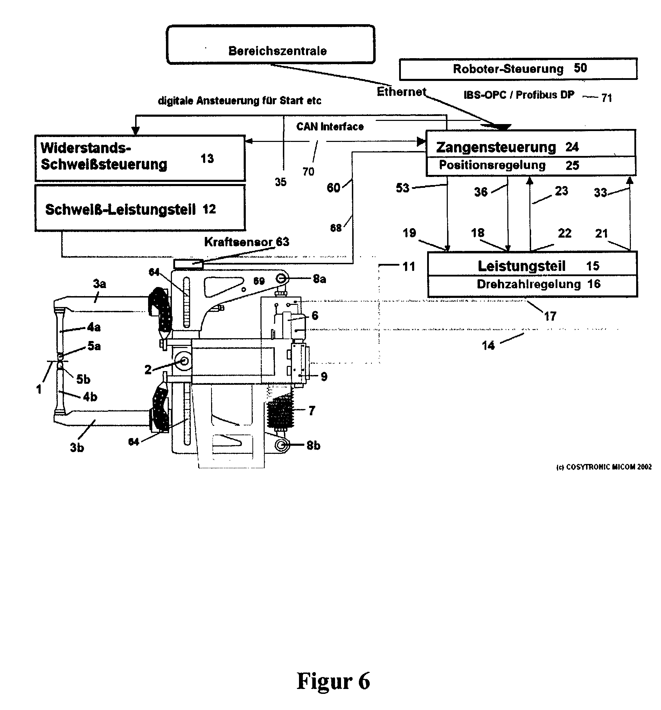

In einer Ausgestaltung der Steuerung nach Figur 6 sind die Widerstandsschweißsteuerung 13 und die Zangensteuerung 24 nicht nur durch die Leitung für das Startsignal 35 zur Auslösung des Schweißstromes, sondern darüber hinaus über ein bidirektionales Interface 70 miteinander verbunden. Das Interface 70 ist ein CAN- (Controller Area Network) -Bus. Die galvanische Trennung zwischen der Widerstandsschweißsteuerung 13 und der Zangensteuerung 24 bewirkt ein Optokoppler.

Die Widerstandsschweiß-Steuerung 13 überträgt über den CAN-Bus 70 an die Zangensteuerung 24 ein Signal über die Beendigung der Schweißphase 30 und eine Maßzahl für die Qualität der Verschweißung. Die Zangensteuerung 24 ermittelt die Qualität der Schweißverbindung unter Berücksichtigung der Auswertung des Kraftistwertes 60, wie unter D. und E. beschrieben, sowie der von der Widerstandsscheiß-Steuerung 13 übertragenen Maßzahl, z.B. in dem im einfachsten Fall der Mittelwert aus beiden Maßzahlen errechnet wird, der mit einem oberen und einem unteren Grenzwert verglichen wird. Die gemeinsame Auswertung der Maßzahl von der Widerstandsschweißsteuerung 13 und der aus dem Kraftistwert 60 in der Zangensteuerung 24 ermittelten Maßzahl erhöht die Aussagegenauigkeit über die Eindringtiefe der Schweißelektroden 4a, 4b erheblich.

Die in der Zangensteuerung 24 abgelegten Schweißparameter werden in der entgegengesetzten Richtung während der Schließphase 27 über den Can-Bus 70 an die Widerstandsschweiß-Steuerung 13 übertragen. Diese Maßnahme ermöglicht es, die anschließende Elektrodenkraftaufbauphase 28 für die Vorpresszeit und Vorwärmung der Elektroden 4a, 4b vor dem Beginn der eigentlichen Schweißphase 30 zu nutzen. Hierdurch lässt sich die Gesamtdauer eines Verfahrenszyklus reduzieren.

Weiter ist aus Figur 6 erkennbar, dass der Zangen- und Widerstandsschweiß-Steuerung 13, 24 eine Roboter-Steuerung 50 vorgeordnet ist, die über einen bidirektionalen Bus 71 mit der Zangensteuerung 24 verbunden ist. Eine zusätzlicher bidirektionaler Bus zwischen der Roboter-Steuerung 50 und der Widerstandsschweiß-Steuerung 13 ist nicht erforderlich, da die Signale zwischen der Robotersteuerung 50 und der Widerstandsschweißsteuerung 13 über das bidirektionale CAN-Interface 70 übertragen werden können. Alternativ ist es möglich, den bidirektionalen Bus 71 ausschließlich mit der Widerstandsschweiß-Steuerung 13 zu verbinden.

### Bezugszeichenliste

| **Nr.** | **Bezeichnung** | **Nr.** | **Bezeichnung** |
|---|---|---|---|
| 1. | Blechteile | 27. | Schließphase |
| 2. | Drehpunkt | 28. | Elektrodenkraftaufbauphase |
| 3.a,b | Elektrodenarm | 29. | - |
| 4.a,b | Stiftelektroden | 30. | Schweißphase |
| 5.a,b | Elektrodenkappen | 31. | - |
| 6. | Elektromotor | 32. | Auswerteverlängerungsphase |
| 7. | Spindel | 33. | Stromistwert |
| 8.a,b | Gelenke | 34. | Referenzposition |
| 9. | Schweißtransformator | 35. | Startsignal |
| 10. | - | 36. | Drehzahlsollwert |
| 11. | Schweißstromkabel | 37. | Maximale Öffnung |
| 12. | Schweißleistungsteil | 38.a-d | Verlängerungsabschnitte |
| 13. | Widerstandsschweiß-Steuerung | 39. | Öffnungsphase |
| 14. | Motorkabel | 40. | Drehzahlsollwertprofil |
| 15. | Leistungsteil | 41. | Gerade |
| 16. | Drehzahlregelung | 42. | Gerade |
| 17. | Eingang Spindelposition | 43. | Schnittpunkt |
| 18. | Drehzahlsollwerteingang | 44. | Referenzbereich |
| 19. | Strombegrenzungseingang | 45. | Messbereich |
| 20. | - | 46. | Gerade |
| 21. | Stromistwertausgang | 47. | Gerade |
| 22. | Spindelpositionsistwertausgang | 48. | Schwerpunkt |
| 23. | Signal Antriebspositionsistwert | 49. | Schwerpunkt |
| 24. | Schweißzangensteuerung | 50. | Roboter-Steuerung |
| 25. | Positionsregelung | 51. | Maximales Eindringen |
| 26. | Schweißlinse | 52. | Stromgrenzwert - |
| | | 53. | Leitspannung |
| | | 60. | Kraftistwert |
| | | 61. | Elektrodenkraft |
| | | 62. | - |
| | | 63. | Kraftsensor |
| | | 64. | Elektrodenarmhalterung |
| | | 65. | Schraubverbindung |
| | | 66.,67 | Messpunkte |
| | | 68. | Messkabel |
| | | 69. | Zangenarm |
| | | 70. | Interface (CAN-Bus) |
| | | 71. | bidirektionales Interface |

## Patentansprüche

1. Schweißzange zum elektrischen Widerstandsschweißen mit zwei Elektroden, von denen mindestens eine an einem Elektrodenarm befestigt ist, Mitteln zum Bewegen von mindestens einem Elektrodenarm, wobei jeder Elektrodenarm endseitig von einer Elektrodenarmhalterung aufgenommen wird, Mitteln zum Erzeugen des Schweißstromes und einem Kraftsensor zur Erfassung eines Kraftistwertes zwischen den beiden Elektroden, **dadurch gekennzeichnet, dass** der Kraftsensor (63) an einer der Elektrodenarmhalterungen (64) angeordnet ist.

2. Schweißzange nach Anspruch 1 , **dadurch gekennzeichnet, dass** die Elektrodenarmhalterung (64) ein Block mit mindestens einer ebenen Fläche ist, auf der der Kraftsensor (63) angeordnet ist.

3. Schweißzange nach Anspruch 1 oder 2, **dadurch gekennzeichnet, dass** die Elektrodenarmhalterung (64) eine gegenüber den Elektrodenarmen (3a,b) isolierte Aufnahme für die Elektrodenarme aufweist.

4. Schweißzange nach einem der Ansprüche 1 bis 3, **dadurch gekennzeichnet, dass** der Kraftsensor (63) ein Dehnungssensor ist, der auf der Oberfläche der Elektrodenarmhalterung (64) vorzugsweise mittels einer Schraubverbindung (65) befestigt ist.

5. Schweißzange nach einem der Ansprüche 1 bis 4, **dadurch gekennzeichnet, dass** der Kraftsensor (63) mindestens ein piezoelektrischen Sensorelement aufweist, das über einen Reibschluss mit der Oberfläche der Elektrodenarmhalterung (65) deren Dehnung misst.

6. Schweißzange nach Anspruch 5, **dadurch gekennzeichnet, dass** die piezoelektrischen Sensorelemente als Ausgangssignal eine elektrische Ladung liefern, die direkt proportional der gemessenen Dehnung ist.

7. Schweißzange nach Anspruch 6, **dadurch gekennzeichnet, dass** der Kraftsensor einen integrierten Verstärker für die elektrische Ladung besitzt, der die Änderung der elektrischen Ladung in ein Spannungssignal wandelt.

8. Schweißzange nach Anspruch 7, **dadurch gekennzeichnet, dass** der Verstärkungsfaktor des Verstärkers veränderlich ist.

9. Schweißzange nach einem der Ansprüche 5 bis 8, **dadurch gekennzeichnet, dass** die Messachse der Sensorelemente vorzugsweise mit der Richtung der größten zu erwartenden Spannungsänderung zusammenfällt.

10. Schweißzange nach einem der Ansprüche 1 bis 9, **dadurch gekennzeichnet, dass** eine elektrisch angetriebene Spindel (7) zum Bewegen mindestens einer der beiden Elektroden (4a, 4b) vorgesehen ist.

11. Verfahren zur Beurteilung der Qualität einer Schweißverbindung von mindestens zwei Blechteilen beim elektrischen Widerstandsschweißen mittels einer Schweißzange nach einem oder mehreren der Ansprüche 1 bis 10 mit einer elektrisch angetriebenen Spindel (7) zum Bewegen mindestens eines Elektrodenarmes (4a,4b), einer Zangensteuerung (24), einer Positionsregelung (25) für den elektrischen Antrieb sowie einem Leistungsteil (15) umfassend eine Drehzahlregelung (16) und einen Leistungsschalter für den elektrischen Antrieb, wobei das Leistungsteil einen Drehzahlsollwerteingang (18), einen Strombegrenzungseingang (19) und einen mit dem Antrieb (6) verbundenen Ausgang für das Motorleistungskabel (14) aufweist, **dadurch gekennzeichnet**,
- in einer Schließphase (27) der Schweißzange die Positionsregelung (25) unter Berücksichtigung des Spindelpositionsistwertes (23) den Abstand zwischen den Elektroden (4 a, b) solange verringert, bis der von dem Kraftsensor (63) gemessene Kraftistwert (60) einen von der Zangensteuerung (24) vorgegebenen ersten Kraftgrenzwert erreicht und/oder die aus der Änderung des Spindelpositionsistwertes (23) über die Zeit abgeleitete Antriebsgeschwindigkeit einen vorgegebenen Geschwindigkeitsgrenzwert unterschreitet,
- die Zangensteuerung (24) nach Erreichen des Kraftgrenzwertes und/oder Geschwindigkeitsgrenzwertes in einer Elektrodenkraftaufbauphase (28) von der Positionsregelung (25) auf die Drehzahlregelung (16) umschaltet und über den Strombegrenzungseingang (19) des Leistungsteils (15) den zum Antriebsmoment proportionalen Antriebsstrom auf einen Stromgrenzwert unterhalb des maximal möglichen Antriebsstroms begrenzt, so dass das Leistungsteil (15) den Antrieb (6) solange mit Strom versorgt, bis sich das dem Stromgrenzwert entsprechende Antriebsmoment einstellt, das eine gewünschte Elektrodenkraft bewirkt und mit einem Stillstand der Spindel (7) einhergeht,
- in einer sich anschließenden Schweißphase (30) Mittel zum Erzeugen des Schweißstromes (12, 13) aktiviert sind und zumindest während der gesamten Schweißphase (30) der Kraftistwert (60) von der Zangensteuerung (24) ausgewertet wird.

12. Verfahren nach Anspruch 11, **dadurch gekennzeichnet, dass** sich an die Schweißphase eine Auswerteverlängerungsphase (32) anschließt, die von der Zangensteuerung (24) in die Auswertung des Kraftistwertes (60) zumindest teilweise einbezogen wird.

13. Verfahren nach Anspruch 12, **dadurch gekennzeichnet, dass** die Auswerteverlängerungsphase (32) in mehrere Verlängerungsabschnitte (38) unterteilt ist, wobei die Zangensteuerung (24) die sich der Schweißphase (30) anschließenden Verlängerungsabschnitte (38) sukzessive solange in die Auswertung einbezieht, bis das Auswerteergebnis eine Aussage über die Schweißqualität zulässt, längstens jedoch bis die maximale Dauer der Auswerteverlängerungsphase (32) erreicht wurde.

14. Verfahren nach einem der Ansprüche 11 bis 13, **dadurch gekennzeichnet, dass** die Auswertung des Kraftistwertes (60) einen der Bewegung der Elektroden (4 a, b) proportionalen Wert liefert, der mit einer Grenze oder einem Wertebereich verglichen und abhängig von diesem Vergleich die Schweißung bewertet wird.

15. Verfahren nach einem der Ansprüche 11 bis 14, **dadurch gekennzeichnet, dass** die Drehzahlregelung (16) zumindest während der Schweißphase (30) und gegebenenfalls der Auswerteverlängerungsphase (32) als PI-Regler betrieben wird.

16. Verfahren nach Anspruch 11 bis 15, **dadurch gekennzeichnet, dass** das Leistungsteil (15) zumindest während der Schweißphase (30) und gegebenenfalls der Auswerteverlängerungsphase (32) mit je einem gesonderten Satz PID-Reglerparametern betrieben wird.

17. Verfahren nach einem der Ansprüche 11 bis 16, **dadurch gekennzeichnet, dass** die Schweißphase (30) und ggf. die Auswerteverlängerungsphase (32) beendet wird, sobald die Auswertung eine ordnungsgemäße Verschweißung ausgibt.

18. Verfahren nach einem der Ansprüche 1 bis 17, **dadurch gekennzeichnet, dass** die Mittel zum Erzeugen des Schweißstromes (13)
- ein Signal über die Beendigung der Schweißphase (30) und/oder
- eine Maßzahl über die Qualität der Verschweißung oder
- den Istwert des Schweißstromes und/oder der Schweißspannung sowie die Stellgröße für den Schweißstrom an die Zangensteuerung (25) übertragen, wobei aus der Stellgröße und jedem Istwert erst in der Zangensteuerung eine Maßzahl über die Qualität der Verschweißung errechnet wird.

19. Verfahren nach Anspruch 18, **dadurch gekennzeichnet, dass** die Zangensteuerung (24) die Qualität der Schweißverbindung unter Berücksichtigung der Maßzahl über die Qualität der Verschweißung und der aus dem Kraftistwert 60 ermittelten Maßzahl beurteilt.

20. Verfahren nach Anspruch 18 oder 19, **dadurch gekennzeichnet, dass** die Signale zwischen den Mitteln zum Erzeugen des Schweißstromes (13) und der Zangensteuerung (25) über ein bidirektionales Interface (35) übertragen werden.

21. Verfahren nach einem der Ansprüche 18 - 20, **dadurch gekennzeichnet, dass** die Schweißparameter zumindest teilweise in der Zangensteuerung (24) abgelegt und von dort über das Interface (35) an die Mittel zum Erzeugen des Schweißstromes (13) übertragen werden.

22. Verfahren nach Anspruch 21, **dadurch gekennzeichnet, dass** die Schweißparameter während der Schließphase (27) übertragen werden.

23. Verfahren nach einem der Ansprüche 20 - 22, **dadurch gekennzeichnet, dass** der Zangen- und Widerstandsschweiß-Steuerung (13, 24) eine Roboter-Steuerung (50) vorgeordnet ist und Signale zwischen der Robotersteuerung (50) einerseits und der Zangensteuerung (24) und Widerstandsschweißsteuerung (13) andererseits über ein bidirektionales Interface (71) übertragen werden, das entweder die Roboter-Steuerung (50) mit der Zangensteuerung (24) oder der Widerstandsschweißsteuerung (13) verbindet.
